# EUROPÄISCHE PATENTSCHRIFT

(11) **EP 3 363 102 B1**
(45) Veröffentlichungstag und Bekanntmachung des Hinweises auf die Patenterteilung: **02.12.2020**
(21) Anmeldenummer: 16779126.8
(22) Anmeldetag: 11.10.2016
(51) Int. Cl.: H02K 9/08, H02K 9/14, H02K 9/18, H02K 9/22

(54) **ELEKTROMOTOR**
ELECTRIC MOTOR
MOTEUR ÉLECTRIQUE

(30) Priorität: 14.10.2015 DE 102015219951
(43) Veröffentlichungstag der Anmeldung: 22.08.2018
(73) Patentinhaber: Lenze Drives GmbH, 32699 Extertal (DE)
(72) Erfinder: TOLKSDORF, Andreas, 31789 Hameln (DE); HÜBNER, Karsten, 31855 Aerzen (DE); HENNIG, Holger, 31785 Hameln (DE)
(74) Vertreter: Patentanwälte Ruff, Wilhelm, Beier, Dauster & Partner mbB
(86) Internationale Anmeldenummer: PCT/EP2016/074378
(87) Internationale Veröffentlichungsnummer: WO 2017/064081

(56) Entgegenhaltungen:
- EP-A1- 1 137 154
- EP-A2- 1 193 837
- CH-A- 545 552
- CN-U- 203 180 720
- US-A- 4 144 932
- US-A1- 2013 342 052

## Beschreibung

Die CH 545 552 A, die EP 1 193 837 A2 und die US 2013/342052 A1 zeigen jeweils einen Elektromotor, aufweisend ein Motorgehäuse, eine in dem Motorgehäuse drehbar gelagerte Motorwelle, eine Wärmequelle, die auf der Motorwelle mitdrehend angeordnet ist, eine erste Kühlrippenanordnung, die auf der Motorwelle mitdrehend angrenzend an die Wärmequelle angeordnet ist, und eine zweite Kühlrippenanordnung, die an dem Motorgehäuse nach innen weisend angeordnet ist, wobei die erste Kühlrippenanordnung und die zweite Kühlrippenanordnung zur Abführung von Wärme von der Wärmequelle aus dem Motorgehäuse heraus ineinandergreifen.

Die Erfindung betrifft einen Elektromotor, der ein Motorgehäuse, eine in dem Motorgehäuse drehbar gelagerte Welle und eine Wärmequelle, die auf der Welle mitdrehend angeordnet ist, aufweist.

Bei einer derartigen mitdrehend angeordneten Wärmequelle kann es sich um eine in dem Elektromotor mitdrehend angeordnete Elektronik handeln. Die Wärmequelle erzeugt typischerweise Verlustwärme, die im Elektromotor zu einer unerwünschten Erhöhung der Motortemperatur führt. Außerdem kann im Elektromotor im Übrigen entstehende Wärme der Wärmequelle schaden, insbesondere wenn es sich dabei um eine Elektronik handelt.

Es ist denkbar, eine mitdrehende Elektronik auf einer Motorwelle außerhalb eines Motorgehäuses anzuordnen, um eine gewisse thermische Entkopplung zu erzielen. Damit ergibt sich allerdings das Problem, dass die Elektronik separat geschützt werden muss, um den bei handelsüblichen Elektromotoren verbreiteten Schutz beispielsweise gemäß einer der Klassen IP54 bis IP56 zu realisieren. Dies erfordert zusätzlichen Aufwand.

Es ist deshalb eine Aufgabe der Erfindung, einen Elektromotor vorzusehen, der ein wirkungsvolles Kühlkonzept mitdrehend angeordneter Wärmequellen zur Verfügung stellt.

Dies wird erfindungsgemäß durch einen Elektromotor gemäß Anspruch 1 erreicht.

Die Erfindung betrifft einen Elektromotor. Der Elektromotor weist ein Motorgehäuse sowie eine in dem Motorgehäuse drehbar gelagerte Welle auf. Der Elektromotor weist des Weiteren eine Wärmequelle auf, die auf der Welle mitdrehend angeordnet ist.

Erfindungsgemäß weist der Elektromotor eine erste Kühlrippenanordnung auf, die auf der Welle mitdrehend angrenzend an die Wärmequelle angeordnet ist, sowie eine zweite Kühlrippenanordnung auf, die an dem Motorgehäuse nach innen bzw. in Richtung der ersten Kühlrippenanordnung weisend angeordnet ist. Die erste Kühlrippenanordnung und die zweite Kühlrippenanordnung greifen zur Abführung von Wärme von der Wärmequelle aus dem Motorgehäuse heraus ineinander.

Mittels des erfindungsgemäßen Elektromotors kann Wärme durch ineinandergreifende Kühlrippen von innen nach außen abgeführt werden, so dass die Wärmequelle innerhalb des Motorgehäuses angeordnet werden kann.

Es sei verstanden, dass es sich bei dem Elektromotor grundsätzlich auch um einen Generator handeln kann.

Das Motorgehäuse kann insbesondere wasserdicht, staubdicht oder dicht gegen andere Einflüsse sein. Hierzu kann es insbesondere einer gewünschten IP-Schutzklasse entsprechen.

Die Wärmequelle ist eine elektrische oder elektronische Schaltung, beispielsweise eine Leistungselektronik zur Steuerung/Regelung des Elektromotors. Eine solche elektronische Schaltung kann innerhalb des Elektromotors bzw. des Motorgehäuses angeordnet sein, um mit möglichst kurzen Verdrahtungswegen beispielsweise Rotorspulen anzusteuern, die mit der Motorwelle drehfest gekoppelt sind.

Die erste Kühlrippenanordnung kann eine Anzahl konzentrisch angeordneter, kreisförmiger Kühlrippen aufweisen. Diese können der Drehbewegung der Welle entsprechen.

Die zweite Kühlrippenanordnung kann entsprechend eine Anzahl konzentrisch angeordneter, kreisförmiger Kühlrippen aufweisen.

Durch die Ausbildung von kreisförmigen Kühlrippen sowohl an der ersten Kühlrippenanordnung wie auch an der zweiten Kühlrippenanordnung kann in vorteilhafter Weise eine ineinander eingreifende Ausgestaltung unter Berücksichtigung der relativen Drehbewegung erreicht werden. Abstände zwischen den Kühlrippen können auf diese Weise minimiert werden, um einen besonders vorteilhaften Wärmetransport zu ermöglichen.

Die Kühlrippen der ersten Kühlrippenanordnung sind bevorzugt bezüglich der Motorwelle radial versetzt zu den Kühlrippen der zweiten Kühlrippenanordnung angeordnet. Dies verhindert einen Kontakt zwischen den Kühlrippen und somit Beschädigungen.

Die zweite Kühlrippenanordnung kann insbesondere ein Lagerschild (A- oder B-Lagerschild) des Elektromotors darstellen bzw. in ein Lagerschild integriert sein. Da an einem solchen Lagerschild typischerweise nicht unmittelbar ein anderes Gerät angrenzt, kann die Wärme besonders gut abgeführt werden. Das Lagerschild kann insbesondere auch für den bereits erwähnten Schutz sorgen.

Gemäß einer Ausführung ist außenseitig zur zweiten Kühlrippenanordnung eine dritte Kühlrippenanordnung mit einer Anzahl von nach außen weisenden Kühlrippen zum Abführen von durch die zweite Kühlrippenanordnung aufgenommener Wärme angeordnet. Dies ermöglicht eine vorteilhafte Ableitung der Wärme nach außen.

Außerhalb des Motorgehäuses kann ein Lüfter auf der Motorwelle angeordnet sein, der dazu ausgebildet ist, bei Drehung der Motorwelle einen Luftstrom vorbei an einem außenseitig der zweiten Kühlrippenanordnung befindlichen Oberflächenabschnitt des Motorgehäuses zu erzeugen. Dies ermöglicht einen verbesserten Abtransport von Wärme, wobei der erzeugte Luftstrom insbesondere auf oder durch die dritte Kühlrippenanordnung geleitet werden kann.

Der Elektromotor weist weiter ein Abschirmteil auf, das mit der Welle mitdrehend an der Wärmequelle angeordnet ist und zur thermischen Abschirmung der Wärmequelle gegenüber elektrischen Wicklungen des Elektromotors dient. Das Abschirmteil kann beispielsweise auch als Abschirmgehäuse ausgebildet sein. Damit kann insbesondere eine verbesserte thermische Entkopplung erreicht werden, die die Wärmequelle vor Überhitzung schützt.

Das Abschirmteil kann dazu ausgebildet sein, die Wärmequelle gegen die erste Kühlrippenanordnung zu drücken. An oder in dem Abschirmteil kann, beispielsweise als Wärmequelle, eine Steuerungselektronik befestigt sein, die Elemente zur drahtlosen Datenkommunikation mit an anderen statischen Elementen des Motors befestigten Gegenstellen der Datenkommunikation enthalten kann. Das Abschirmteil kann auch eine umlaufende Dichtkontur aufweisen.

Elektrische Zuleitungen zu dem Abschirmteil bzw. zu der Wärmequelle können im Abschirmteil angeordnet sein. Dies ermöglicht eine einfache Fertigung.

Das Abschirmteil kann aus Kunststoff hergestellt sein. Dies verbessert die thermische Abschirmung.

Das Abschirmteil kann eine Anzahl von Flügeln zur Bewegung umgebender Luft aufweisen. Dies verbessert die Wärmeübertragung. Das Abschirmteil kann auch Elemente zur Datenkommunikation mit einer an anderen - jedoch statischen - Teilen des Motors befestigten Gegenstelle aufnehmen.

Die erste Kühlrippenanordnung kann eine Anzahl von Flügeln zur Bewegung umgebender Luft aufweisen. Auch damit kann die Luft vorteilhaft bewegt werden, um die Wärmeübertragung zu verbessern.

Die erste, zweite und/oder dritte Kühlrippenanordnung und/oder das Motorgehäuse können aus einem Metall, insbesondere aus Aluminium, bestehen. Damit werden insbesondere ein stabiler Aufbau und eine gute Wärmeleitfähigkeit erreicht.

Die Wärmeleitung kann insbesondere durch Konvektion in Luft erreicht werden. Es sei jedoch verstanden, dass grundsätzlich alle Wärmeleitungsmechanismen, insbesondere auch die Übertragung durch Wärmestrahlung, in Betracht kommen.

Die Wärmequelle bzw. die Leistungselektronik kann auf einem mitdrehenden Kühlkörper thermisch gut angebunden befestigt sein.

Es sei verstanden, dass durch die erfindungsgemäße Ausgestaltung eine Minimierung der mechanischen Bauteile durch das multifunktionale Abschirmteil möglich ist. Zusätzlich zur Abschirmung der Elektromotorwärme können beispielsweise, insbesondere durch das Abschirmteil, auch Leistungshalbleiter angedrückt werden, die Steuerplatine mechanisch befestigt werden und die Kontakte für die elektrische Verbindung zum Rotor geführt werden.

Eine Elektronik kann inklusive Kühlkörper und Abschirmteil komplett separat gefertigt werden.

Die Elektronik bzw. die Wärmequelle allgemein kann auf dem Rotor befestigt werden, bevor dieser in den Stator eingesetzt wird.

Durch die erwähnten Maßnahmen sind die herzustellenden elektrischen Verbindungen gut zugänglich.

Insbesondere ergibt sich auch ein Kostenvorteil gegenüber Lösungen, die außen am Elektromotor verbaut werden, wobei eine Minimierung erforderlicher, separat abgedichteter Gehäuseteile erfolgt.

Die Erfindung wir nachfolgend detailliert unter Bezugnahme auf die Zeichnungen beschrieben. Dabei zeigen:
- Fig. 1:: eine Schnittansicht eines Elektromotors,
- Fig. 2:: eine erste Kühlrippenanordnung und eine zweite Kühlrippenanordnung und
- Fig. 3:: ein Zusammenwirken von erster und zweiter Kühlrippenanordnung.

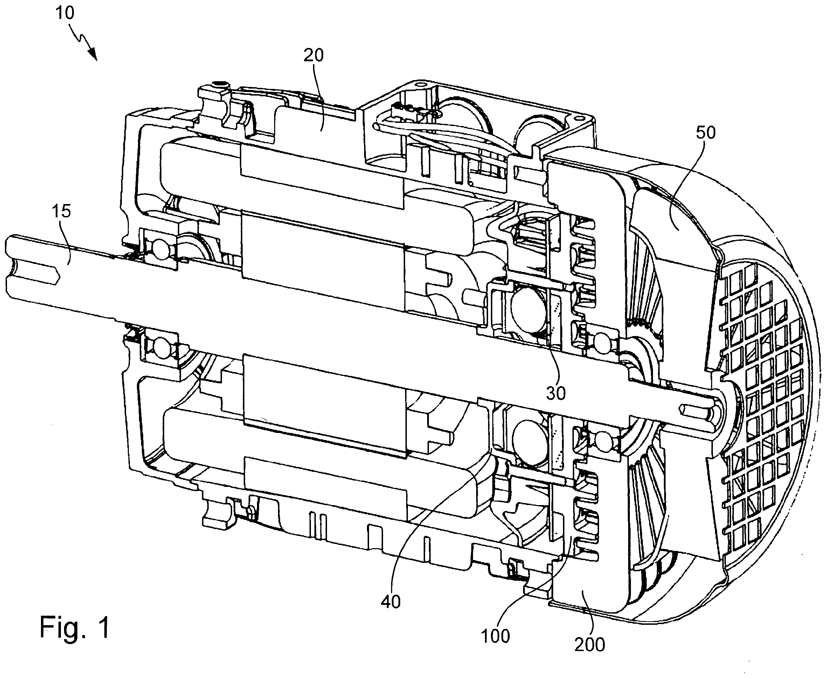

Fig. 1 zeigt einen Elektromotor 10 gemäß der Erfindung. Der Elektromotor 10 weist eine Welle 15 auf, die mittels des Elektromotors 10 in eine Drehbewegung versetzt werden kann und die dazu ausgebildet ist, außerhalb des Elektromotors 10 liegende Komponenten anzutreiben.

Der Elektromotor 10 weist ein umschließendes Motorgehäuse 20 auf, in dem herkömmlich Komponenten enthalten sind, die dazu dienen, die Welle 15 in Rotation zu versetzen. Hierbei handelt es sich beispielsweise um Spulen, entsprechende Zuleitungen, usw. Insoweit sei auch auf die einschlägige Fachliteratur verwiesen.

Auf der Welle 15 mitdrehend ist eine Platine 30 angeordnet. Auf der Platine 30 sind unter anderem Leistungshalbleiter angeordnet, die zur Ansteuerung von Rotorspulen des Elektromotors 10 dienen und die im Betrieb Verlustwärme erzeugen.

In Fig. 1 linksseitig zur Platine 30 ist ein Abschirmteil 40 aus Kunststoff angeordnet, das die Platine 30 gegenüber linksseitig des Abschirmteils 40 angeordneten Komponenten, insbesondere Rotorspulen, zumindest teilweise thermisch entkoppelt.

Aufgrund der bereits beschriebenen Wärmeentwicklung auf der Platine 30 kann die Platine 30 auch als Wärmequelle bezeichnet werden. Um die dabei entstehende Wärme möglichst effektiv nach außen abzuführen, sind eine erste Kühlrippenanordnung 100 und eine zweite Kühlrippenanordnung 200 vorgesehen. Diese greifen ineinander, was nachfolgend mit Bezug auf die weiteren Figuren näher dargestellt und beschrieben werden wird.

Rechtsseitig der Kühlrippenanordnungen 100, 200 ist ein Lüfter 50 auf der Motorwelle 15 angeordnet, der sich mit der Motorwelle 15 mitdreht und Luft nach links bläst. Der solchermaßen erzeugte Luftstrom dient zur Kühlung, wobei dieser insbesondere unmittelbar auf die zweite Kühlrippenanordnung 200 geleitet wird und somit dort anfallende Wärme bzw. dort eintreffende Wärme in die Umgebung abführt und für eine Belüftung sorgt.

Es sei erwähnt, dass die zweite Kühlrippenanordnung 200 vorliegend auch ein B-Lagerschild des Elektromotors 10 darstellt. Dies ermöglicht eine vorteilhafte Integration und ein Einsparen von Bauraum.

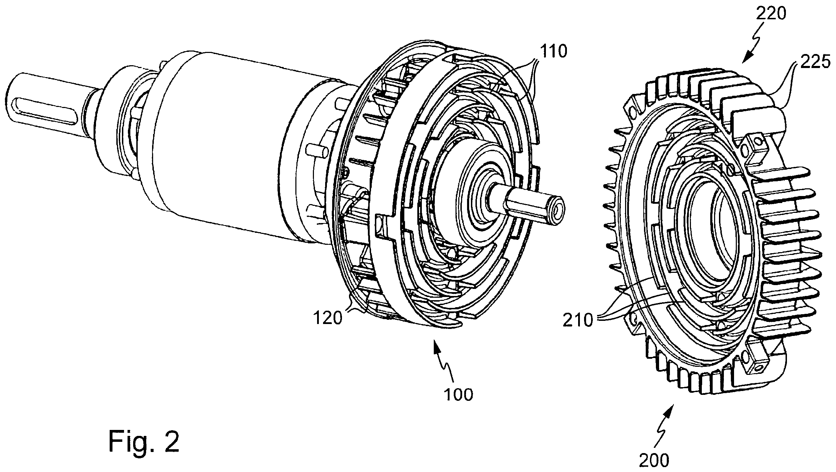

Fig. 2 zeigt die erste Kühlrippenanordnung 100 und die zweite Kühlrippenanordnung 200 in größerer Detailliertheit. Dabei ist zu erkennen, dass die erste Kühlrippenanordnung 100 eine Anzahl von kreisbogensegmentförmigen Kühlrippen 110 aufweist, die konzentrisch zueinander angeordnet sind. Zwischen diesen Kühlrippen 110 ist jeweils freier Raum, in den - wie weiter unten näher beschrieben werden wird - eine Anzahl entsprechender Kühlrippen 210 der zweiten Kühlrippenanordnung 200 eingreifen können.

Die Platine 30 ist unmittelbar angrenzend an die erste Kühlrippenanordnung 100 angeordnet und wird durch das Abschirmteil 40 in Richtung auf die erste Kühlrippenanordnung 100 zu gedrückt. Damit wird eine besonders vorteilhafte Ableitung von Wärme, die in oder an der Platine 30 entsteht, zur ersten Kühlrippenanordnung 100 hin erreicht. Diese Wärme kann dann über die Kühlrippen 110 der ersten Kühlrippenanordnung 100 weiter nach außen abgeführt werden, wie weiter unten ausführlicher beschrieben werden wird.

Seitlich an der ersten Kühlrippenanordnung 100 sind eine Anzahl von Flügeln 120 angebracht, die die Platine 30 umgeben. Die Flügel 120 dienen dazu, eine gewisse Bewegung der im Elektromotor 10 befindlichen Luft sicherzustellen. Auch damit kann eine bessere Kühlwirkung insbesondere der Platine 30 erreicht werden.

Um diese Luftbewegung zu erreichen, ist die erste Kühlrippenanordnung 100 unmittelbar auf der Welle 15 montiert, so dass sich auch die erste Kühlrippenanordnung 100 mit der Welle 15 mitdreht. Dies ermöglicht eine Bewegung der Platine 30 und der ersten Kühlrippenanordnung 100 mit identischer Winkelgeschwindigkeit. Außerdem wird, wie eben erwähnt, Luft mittels der Flügel 120 zur Unterstützung der Kühlung bewegt.

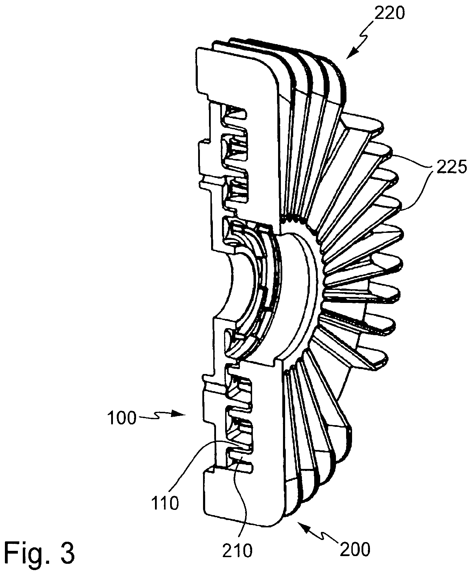

In Fig. 2 ist weiter zu erkennen, dass innenseitig an der zweiten Kühlrippenanordnung 200 die zweiten Kühlrippen 210 angeordnet sind, die jeweils kreisbogensegmentförmig oder kreisbogenförmig ausgebildet sind und konzentrisch zueinander angeordnet sind. Die Kühlrippen 210 der zweiten Kühlrippenanordnung 200 können somit in die bereits weiter oben erwähnten Zwischenräume zwischen den Kühlrippen 110 der ersten Kühlrippenanordnung 100 eingreifen. Dies erlaubt ein besonders vorteilhaftes Zusammenwirken der Kühlrippen 110, 210, wie weiter unten mit Bezug auf Fig. 3 näher beschrieben werden wird.

Außenseitig zur zweiten Kühlrippenanordnung 200 ist ferner eine dritte Kühlrippenanordnung 220 mit einer Anzahl von radial nach außen weisenden Kühlrippen 225 ausgebildet, wobei die zweite und die dritte Kühlrippenanordnung einstückig ausgebildet sind. Die dritte Kühlrippenanordnung 220 kann insbesondere Wärme, die von den Kühlrippen 210 der zweiten Kühlrippenanordnung 200 aufgenommen wird, nach außen abführen. Die dritte Kühlrippenanordnung 220 wird insbesondere auch von der Luft durchströmt, die von dem weiter oben bereits erwähnten Lüfter 50 erzeugt wird. Dies ermöglicht insgesamt eine besonders vorteilhafte Abführung von Wärme.

Fig. 3 zeigt das Zusammenwirken von erster und zweiter Kühlrippenanordnung 100, 200. Dabei ist insbesondere zu sehen, dass die Kühlrippen 110, 210 der beiden Kühlrippenanordnungen 100, 200 ineinander eingreifen, so dass insgesamt eine große Oberfläche erzielt wird, entlang der sich die Kühlrippen 110, 210 unmittelbar gegenüberliegen. Dies ermöglicht einen besonders guten Wärmetransport, ohne dass sich die Kühlrippen 110, 210 auch unter Drehbewegung berühren. Die Kühlrippen 110 der ersten Kühlrippenanordnung 100 können sich frei in Zwischenräumen zwischen den Kühlrippen 210 der zweiten Kühlrippenanordnung 200 bewegen, wobei diese Betrachtungsweise hinsichtlich der Relativbewegung auch umgekehrt werden kann.

Insgesamt wird somit eine vorteilhafte Ableitung von Wärme von der Platine 30 über die erste Kühlrippenanordnung 100 auf die zweite Kühlrippenanordnung 200 und von dieser wiederum auf die dritte Kühlrippenanordnung 220 erreicht, wobei von der dritten Kühlrippenanordnung 220 aus die Wärme nach außen abgeführt werden kann, und zwar insbesondere mittels des weiter oben bereits erwähnten Luftstroms, der durch den Lüfter 50 erzeugt wird. Gleichzeitig wird die Platine 30 durch das Abschirmteil 40 gegenüber weiteren wärmeerzeugenden Komponenten des Elektromotors 10 abgeschirmt.

Es sei des Weiteren erwähnt, dass das bereits erwähnte Motorgehäuse 20 insgesamt einen üblichen Schutz gegen Staub und Feuchtigkeit darstellt, der auch für die Platine 30 gilt. Auf eine separate Einkapselung der Platine 30 zum Erreichen einer bestimmten Schutzklasse kann somit verzichtet werden. Dies ermöglicht einen einfachen und kompakten Aufbau.

## Patentansprüche

1. Elektromotor (10), aufweisend:
- ein Motorgehäuse (20),
- eine in dem Motorgehäuse (20) drehbar gelagerte Motorwelle (15),
- eine Wärmequelle (30) in Form einer elektronischen Schaltung, die auf der Motorwelle (15) mitdrehend angeordnet ist,
- eine erste Kühlrippenanordnung (100), die auf der Motorwelle (15) mitdrehend angrenzend an die Wärmequelle (30) angeordnet ist, und
- eine zweite Kühlrippenanordnung (200), die an dem Motorgehäuse (20) nach innen weisend angeordnet ist,
- wobei Kühlrippen (110) der ersten Kühlrippenanordnung (100) und Kühlrippen (210) der zweiten Kühlrippenanordnung (200) zur Abführung von Wärme von der Wärmequelle (30) aus dem Motorgehäuse (20) heraus ineinandergreifen,
**gekennzeichnet durch**
- ein Abschirmteil (40), das mit der Motorwelle (15) mitdrehend an der Wärmequelle (30) zur thermischen Abschirmung der Wärmequelle (30) gegenüber elektrischen Wicklungen des Elektromotors (10) angeordnet ist.

2. Elektromotor (10) nach Anspruch 1,
**dadurch gekennzeichnet, dass**
- die erste Kühlrippenanordnung (100) eine Anzahl konzentrisch angeordneter, kreisförmiger Kühlrippen (110) aufweist.

3. Elektromotor (10) nach einem der vorhergehenden Ansprüche,
**dadurch gekennzeichnet, dass**
- die zweite Kühlrippenanordnung (200) eine Anzahl konzentrisch angeordneter, kreisförmiger Kühlrippen (210) aufweist.

4. Elektromotor (10) nach Anspruch 2 und Anspruch 3,
**dadurch gekennzeichnet, dass**
- die Kühlrippen (110) der ersten Kühlrippenanordnung (100) bezüglich der Motorwelle (15) radial versetzt zu den Kühlrippen (210) der zweiten Kühlrippenanordnung (200) angeordnet sind.

5. Elektromotor (10) nach einem der vorhergehenden Ansprüche,
**dadurch gekennzeichnet, dass**
- die zweite Kühlrippenanordnung (200) ein Lagerschild des Elektromotors (10) darstellt.

6. Elektromotor (10) nach einem der vorhergehenden Ansprüche,
**dadurch gekennzeichnet, dass**
- außenseitig zur zweiten Kühlrippenanordnung (200) eine dritte Kühlrippenanordnung (220) mit einer Anzahl von nach außen weisenden Kühlrippen (225) zum Abführen von durch die zweite Kühlrippenanordnung (200) aufgenommener Wärme angeordnet ist.

7. Elektromotor (10) nach einem der vorhergehenden Ansprüche
**dadurch gekennzeichnet, dass**
- außerhalb des Motorgehäuses (20) ein Lüfter (50) auf der Motorwelle (15) angeordnet ist, der dazu ausgebildet ist, bei Drehung der Motorwelle (15) einen Luftstrom vorbei an einem außenseitig der zweiten Kühlrippenanordnung (200) befindlichen Oberflächenabschnitt des Motorgehäuses (20) zu erzeugen.

8. Elektromotor (10) nach einem der vorhergehenden Ansprüche,
**dadurch gekennzeichnet, dass** das Abschirmteil (40) dazu ausgebildet ist, die Wärmequelle (30) gegen die erste Kühlrippenanordnung (100) zu drücken, und/oder an oder in dem Abschirmteil (40) eine Steuerungselektronik befestigt ist, und/oder das Abschirmteil (40) eine umlaufende Dichtkontur aufweist.

9. Elektromotor (10) nach einem der vorhergehenden Ansprüche,
**dadurch gekennzeichnet dass**
- das Abschirmteil (40) eine Anzahl von Flügeln zur Bewegung umgebender Luft aufweist, und/oder
- die erste Kühlrippenanordnung (100) eine Anzahl von Flügeln (120) zur Bewegung umgebender Luft aufweist.

## Claims

1. Electric motor (10), having:
- a motor housing (20),
- a motor shaft (15) which is rotatably mounted in the motor housing (20),
- a heat source (30) in the form of an electronic circuit which is in a co-rotating manner mounted on the motor shaft (15),
- a first cooling fin arrangement (100) which is arranged on the motor shaft (15) in a co-rotating manner and adjacent to the heat source (30), and
- a second cooling fin arrangement (200) which is arranged on the motor housing (20) such that it points inward,
- wherein cooling fins (110) of the first cooling fin arrangement (100) and cooling fins (210) of the second cooling fin arrangement (200) engage for the purpose of dissipating heat from the heat source (30) out of the motor housing (20),
**characterized by**
- a shielding part (40) which, in a co-rotating manner with the motor shaft (15), is arranged on the heat source (30) for thermally shielding the heat source (30) from electrical windings of the electric motor (10).

2. Electric motor (10) according to claim 1, **characterized in that**
- the first cooling fin arrangement (100) has a number of concentrically arranged, circular cooling fins (110).

3. Electric motor (10) according to any of the preceding claims, **characterized in that**
- the second cooling fin arrangement (200) has a number of concentrically arranged, circular cooling fins (210).

4. Electric motor (10) according to claim 2 and claim 3, **characterized in that**
- the cooling fins (110) of the first cooling fin arrangement (100) are arranged radially offset in relation to the cooling fins (210) of the second cooling fin arrangement (200) with respect to the motor shaft (15).

5. Electric motor (10) according to any of the preceding claims, **characterized in that**
- the second cooling fin arrangement (200) constitutes an end plate of the electric motor (10).

6. Electric motor (10) according to any of the preceding claims, **characterized in that**
- a third cooling fin arrangement (220) having a number of outwardly pointing cooling fins (225) for dissipating heat which is absorbed by the second cooling fin arrangement (200) is arranged on the outside in relation to the second cooling fin arrangement (200).

7. Electric motor (10) according to any of the preceding claims, **characterized in that**
- a fan (50) is arranged on the motor shaft (15) outside the motor housing (20), said fan being designed to generate an air flow past a surface section of the motor housing (20), which surface section is located on the outside of the second cooling fin arrangement (200), when the motor shaft (15) rotates.

8. Electric motor (10) according to any of the preceding claims, **characterized in that**
- the shielding part (40) is designed to press the heat source (30) against the first cooling fin arrangement (100), and/or a control electronics system is fastened to or in the shielding part (40), and/or the shielding part (40) has a circumferential sealing contour.

9. Electric motor (10) according to any of the preceding claims, **characterized in that**
- the shielding part (40) has a number of vanes for moving ambient air, and/or
- the first cooling fin arrangement (100) has a number of vanes (120) for moving ambient air.

## Revendications

1. Moteur électrique (10), présentant :
- un carter moteur (20),
- un arbre de moteur (15) supporté de manière rotative dans le carter moteur (20),
- une source de chaleur (30) sous la forme d'un circuit électronique, qui est disposée sur l'arbre de moteur (15) de manière à tourner conjointement avec celui-ci,
- un premier agencement d'ailettes de refroidissement (100) qui est disposé sur l'arbre de moteur (15) de manière à tourner conjointement avec celui-ci, à côté de la source de chaleur (30), et
- un deuxième agencement d'ailettes de refroidissement (200) qui est disposé au niveau du carter moteur (20) de manière orientée vers l'intérieur,
- des ailettes de refroidissement (110) du premier agencement d'ailettes de refroidissement (100) et des ailettes de refroidissement (210) du deuxième agencement d'ailettes de refroidissement (200) s'engageant les unes dans les autres afin d'évacuer de la chaleur de la source de chaleur (30) hors du carter moteur (20),
**caractérisé par**
- une partie de blindage (40) qui est disposée au niveau de la source de chaleur (30) de manière à tourner conjointement avec l'arbre de moteur (15) pour isoler thermiquement la source de chaleur (30) des enroulements électriques du moteur électrique (10).

2. Moteur électrique (10) selon la revendication 1, **caractérisé en ce que**
- le premier agencement d'ailettes de refroidissement (100) présente un certain nombre d'ailettes de refroidissement circulaires (110) disposées concentriquement.

3. Moteur électrique (10) selon l'une quelconque des revendications précédentes,
**caractérisé en ce que**
- le deuxième agencement d'ailettes de refroidissement (200) présente un certain nombre d'ailettes de refroidissement circulaires (210) disposées concentriquement.

4. Moteur électrique (10) selon la revendication 2 et la revendication 3,
**caractérisé en ce que**
- les ailettes de refroidissement (110) du premier agencement d'ailettes de refroidissement (100) sont disposées, par rapport à l'arbre de moteur (15), de manière décalée radialement par rapport aux ailettes de refroidissement (210) du deuxième agencement d'ailettes de refroidissement (200).

5. Moteur électrique (10) selon l'une quelconque des revendications précédentes,
**caractérisé en ce que**
- le deuxième agencement d'ailettes de refroidissement (200) constitue un flasque de palier du moteur électrique (10).

6. Moteur électrique (10) selon l'une quelconque des revendications précédentes,
**caractérisé en ce**
- **qu'**un troisième agencement d'ailettes de refroidissement (220) avec un certain nombre d'ailettes de refroidissement (225) orientées vers l'extérieur est disposé du côté extérieur par rapport au deuxième agencement d'ailettes de refroidissement (200), pour évacuer la chaleur reçue par le deuxième agencement d'ailettes de refroidissement (200).

7. Moteur électrique (10) selon l'une quelconque des revendications précédentes,
**caractérisé en ce**
- **qu'**à l'extérieur du carter moteur (20), un ventilateur (50) est disposé sur l'arbre de moteur (15), lequel est réalisé pour générer lors de la rotation de l'arbre de moteur (15) un flux d'air s'écoulant devant une portion de surface du carter moteur (20) se trouvant du côté extérieur du deuxième agencement d'ailettes de refroidissement (200).

8. Moteur électrique (10) selon l'une quelconque des revendications précédentes,
**caractérisé en ce que** la partie de blindage (40) est réalisée pour presser la source de chaleur (30) contre le premier agencement d'ailettes de refroidissement (100), et/ou une électronique de commande est fixée sur ou dans la partie de blindage (40), et/ou la partie de blindage (40) présente un contour d'étanchéité périphérique.

9. Moteur électrique (10) selon l'une quelconque des revendications précédentes,
**caractérisé en ce que**
- la partie de blindage (40) présente un certain nombre de pales pour déplacer l'air environnant, et/ou
- le premier agencement d'ailettes de refroidissement (100) présente un certain nombre de pales (120) pour déplacer l'air environnant.
